# EUROPÄISCHE PATENTSCHRIFT

(11) **EP 0 268 752 B1**
(45) Veröffentlichungstag und Bekanntmachung des Hinweises auf die Patenterteilung: **03.11.1993**
(21) Anmeldenummer: 87112162.0
(22) Anmeldetag: 21.08.1987
(51) Int. Cl.: B01D 29/00, B01D 29/62

(54) **Vorrichtung zur mechanischen Reinigung von Flüssigkeiten**
Apparatus for the mechanical purification of liquids
Appareil pour l'épuration mécanique de liquides

(30) Priorität: 28.11.1986 DE 3640638
(43) Veröffentlichungstag der Anmeldung: 01.06.1988
(73) Patentinhaber: Taprogge Gesellschaft mbH, 58300 Wetter (DE)
(72) Erfinder: Eimer, Klaus, D-4030 Ratingen 6 (DE); Bitzer, Klaus-Michael, D-4130 Moers 1 (DE); Schildmann, Hans-Werner, D-5629 Heiligenhaus (DE); Patzig, Dieter, D-4030 Ratingen 1 (DE); Taprogge, Detlev, D-5802 Wetter Ruhr 4 (DE)
(74) Vertreter: Patentanwälte Wenzel & Kalkoff

(56) Entgegenhaltungen:
- EP-A- 0 082 520
- DE-A- 3 347 064
- DE-A- 3 419 698
- DE-B- 2 502 669
- US-A- 2 310 587

## Beschreibung

Die Erfindung betrifft eine Vorrichtung zur mechanischen Reinigung von Flüssigkeiten nach dem Oberbegriff des Anspruchs 1.

Eine derartige Vorrichtung ist z. B. aus der DE-A-3347064 bekannt. Charakteristisch für diese Gattung von Vorrichtungen ist die Beibehaltung des Rohrdurchmessers, in dem die Flüssigkeit geführt wird, beispielsweise das Kühlwasser für einen Kondensator. Es steht nämlich für den genannten Einsatzzweck nicht genügend Raum zur Verfügung, um ein den Rohrdurchmesser übersteigendes Filtergehäuse mit entsprechend großen Filterflächen unterzubringen. Bei der bekannten Vorrichtung werden zur Herbeiführung einer ausreichend großen Filterfläche Filterkerzen beträchtlicher Länge verwendet, die jedoch nicht nur Vorteile haben. Die Länge der Filterkerzen ist nämlich insofern begrenzt, als bei zu großer Länge keine Rückströmung mehr an jedem Ort der Filterkerze eintritt und so der Rückspüleffekt nicht mehr mit der erforderlichen Zuverlässigkeit genutzt werden kann, wenn z. B. eine von vier Filterkerzen durch Rückströmung gereinigt werden soll.

Aus der US-A-2,310,587 ist eine Reinigungsvorrichtung bekannt, die sich zur Unterbringung des Siebkörpers eines gesonderten Gehäuses bedient, dessen Durchmesser wesentlich größer ist als der Rohrdurchmesser für die zu- und ablaufende Flüssigkeit. Der Siebkörper ist in Sektoren eingeteilt, die nacheinander von einer Absaugvorrichtung angefahren und durch Rückspülen gereinigt werden. Die Absaugvorrichtung überdeckt in der Position, in der die Absaugöffnung deckungsgleich ist mit dem zu reinigenden Sektor, insgesamt drei Sektoren, weil neben der Öffnung der Absaugvorrichtung plattenförmige Körper angebracht sind, die vor und nach der Deckungsgleichheit zwischen der Öffnung der Absaugvorrichtung und abzusaugendem Sektor für eine fehlerlose Rückströmung des zu reinigenden Siebsektors sorgen. Infolge der seitlichen, plattenförmigen Körper wird permanent eine drei Sektoren umfassende Siebfläche abgedeckt und damit vom Beitrag zur Reinigung ausgeschlossen, die dann nicht mehr tragbar ist, wenn für den Siebkörper ein Raum zur Verfügung steht, der dem Durchmesser des Rohres entspricht, das die Flüssigkeit führt.

Es ist Aufgabe der Erfindung, eine Vorrichtung der eingangs genannten Art so zu verbessern, daß bei optimaler Ausnutzung der vorhandenen Siebfläche in kürzester Zeit jeder Siebbereich wirksam durch Rückströmung gereinigt werden kann.

Zur Lösung dieser Aufgabe werden die kennzeichnenden Merkmale des Anspruchs 1 vorgeschlagen.

Es hat sich überraschend gezeigt, daß es der seitlichen, plattenförmigen Körper an der Absaugvorrichtung nicht bedarf, um bei kontinuierlich umlaufender Absaugvorrichtung eine heftige, für die vollständige Reinigung eines Sektors ausreichende Rückströmung zu erhalten. Vielmehr genügt eine Breite jeder Kante der Eintrittsdüse der Absaugvorrichtung, die die Breite der Eintrittsdüsenwand deutlich übersteigt. Dadurch ist jeder Sektor nur für ca. 1 Sekunde oder weniger vollständig isoliert, dieser Zeitraum reicht jedoch aus, um eine vollständige Reinigung herbeizuführen. Dabei ist zu beachten, daß durch die Annäherung an die Überdeckungslage die Flüssigkeit in dem im nächsten Augenblick zu reinigenden Sektor stark verwirbelt wird, was sich positiv auf das Ablösen von Verunreinigungen von der Siebfläche auswirkt. Auch wird selbstverständlich durch die Annäherung an die Überdeckungslage die Durchströmungsgeschwindigkeit beispielsweise des Kühlwassers zunehmend abgebremst, so daß im Augenblick der Deckungsgleichheit zwischen Absaugvorrichtung und einem Sektor die Rückströmung ohne Verzögerung einsetzen kann.

Ein weiterer Vorteil ergibt sich, wenn die Stege mit einem radial außenliegenden, umlaufenden Ring ein eigenständiges, starres Traggerüst bilden, in dessen Sektoren einzelne Siebkörper eingesetzt und gehalten sind. Damit ist auch bei großen Rohrleitungsdurchmessern eine hohe Eigensteifigkeit des eigentlichen Siebkörpers gewährleistet.

Die Siebe können aber auch aus zweidimensional gewölbten Segmenten bestehen, die von der Mittelachse angenähert radial horizontal ausgehen und sich angenähert tangential bis an den Innenumfang des umlaufenden Ringes erstrecken. Dabei ist es zweckmäßig, wenn die Siebsegmente mittels jeweils oberhalb und unterhalb von ihnen an den Stegen befestigten Platten eingespannt sind derart, daß die Platten eine Kontur an der Einspannstelle entsprechend der Siebwölbung aufweisen.

Bei einer solchen Ausgestaltung können darüber hinaus eines oder mehrere der Siebsegmente als Überdruckklappen derart ausgebildet sein, daß sie über eine im Bereich ihrer Außenkante quer zu ihrer Radialerstreckung verlaufende Achse in Strömungsrichtung schwenkbar gehaltert sind.

Zur Verbesserung des Ablaufs des Wassers können dabei die Stegwände beiderseits eines als Überdruckklappe ausgebildeten Siebsegments Überströmöffnungen für das Überdruckwasser aufweisen.

Eine weitere Konstruktionsmöglichkeit besteht darin, daß durch die Stege und Umfangsringe eine kegelstumpfförmige Rahmenkonstruktion gebildet wird, auf die entsprechende kegelmantelförmige Siebflächen und eine stirnseitige, ebene Siebfläche aufmontiert sind. Diese ebene Siebfläche mit den zugehörigen Rahmenteilen kann dann über einen Antrieb als Bypaßklappe ausfahrbar sein.

Zum besonders platzsparenden Einbau einer Siebvorrichtung ist ferner eine Konstruktion möglich, bei der die Kanten der radialen Stege zwischen den Siebsegmenten auf Anström- und Abströmseite entsprechend Kegelmantellinien verlaufen und die Siebkonstruktion zusammen mit der anströmseitigen Absaugdüse und deren abströmseitig der Siebstege angeordnete Antrieb vollständig innerhalb der die Wasserkammer des Kondensators bildende Rohrleitung angeordnet sind.

Der feststehende Teil der Absaugrohrleitung kann dann axial-radial in einem der Wasserkammer vorgeschalteten und diesen nach außen durchsetzenden Flanschrohrabschnitt angeordnet sein.

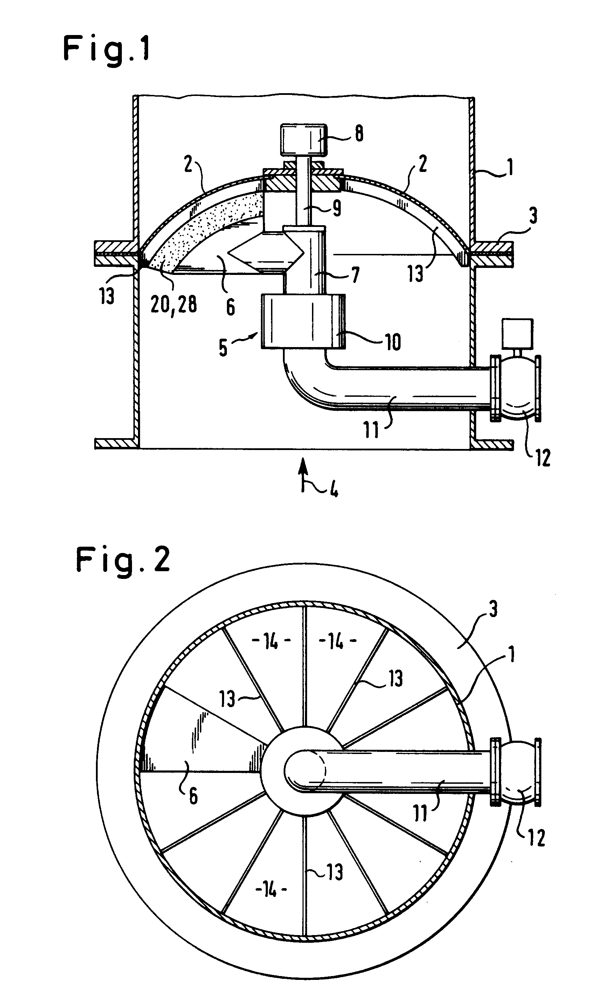

Anhand einer schematischen Zeichnung sind Aufbau und Wirkungsweise von Ausführungsbeispielen nach der Erfindung näher erläutert. Dabei zeigen
- Fig. 1: einen Längsschnitt durch eine Rohrleitung mit eingesetztem Siebkörper und Absaugvorrichtung,
- Fig. 2: einen Querschnitt durch diese Rohrleitung mit Blick auf die anströmseitige Seibfläche mit Absaugvorrichtung,.
- Fig. 3: einen Teillängsschnitt durch die Siebfläche in Abwicklung und die Absaugdüse mit an den Stegen befestigten Dichtlippen,
- Fig. 4: einen Radialschnitt durch einen Steg und Absaugdüse mit umfangseitigen Dichtlippen,
- Fig. 5: einen Siebkörper in kegelförmiger Ausbildung mit aufgesetzten Stegen,
- Fig. 6: einen Längsschnitt durch eine kegelförmiges Sieb mit radialen Trennwänden,
- Fig. 7: einen Siebkörper mit durch die Stege gebildetem Traggerüst und einzelnen Siebkörben,
- Fig. 8: einen Längsschnitt durch ein kegelstumpfförmiges Sieb mit einer als Bypaßklappe wirkenden Siebfläche,
- Fig. 9: einen Längsschnitt durch eine Rohrleitung mit einer weiteren Variante des Siebkörpers,
- Fig. 10: einen Schnitt durch die Siebflächen und eine als Bypaßklappe ausgebildete Siebfläche und
- Fig. 11: einen Querschnitt durch ein Siebsegment mit Halterung entsprechend der Schnittlinie XII-XII nach Fig. 10
Wie man aus Fig. 1 ersieht, ist in eine Kühlwasserzuführungsleitung 1, beispielsweise zu einem Wärmetauscher oder zu dem Kondensator eines Kraftwerkes, ein kugelkalottenförmiger Siebkörper 2 eingebaut, der innerhalb eines Flansches 3 der Rohrleitung 1 verspannt ist. Die Kühlwasserströmung durchsetzt dabei die Rohrleitung 1 in Richtung des Pfeiles 4. Auf der Anströmseite des Siebkörpers 2 ist eine Absaugvorrichtung 5 mit einer dem Siebkörper 2 gegenüberstehenden Absaugdüse 6 angeordnet, die mit einem zur Rorhleitung 1 koaxialen Stutzen 7 verbunden und über einen Motor 8 auf der Abströmseite des Siebkörpers 2 und eine Welle 9 rotierend angetrieben ist. In einem an den Rohrstutzen 7 anschließenden Kupplungsstück 10 geht der Absaugstutzen 7 in einen feststehenden Rohrbogen 11 über, der die Rohrleitungswandung 1 radial nach außen durchsetzt und über einen Schieber 12 an eine nicht näher dargestellte Absaugleitung angeschlossen ist.

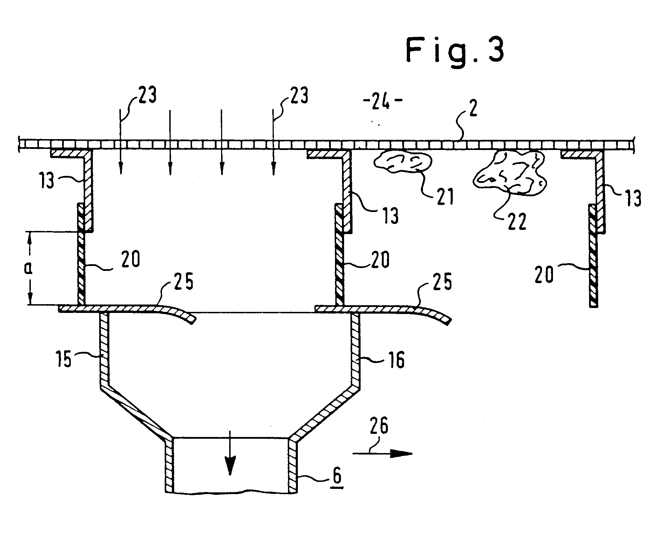

Wie man aus der Ansicht von unten auf den Siebkörper 2 entsprechend Fig. 2 und den Schnitt durch die Abwicklung der Siebfläche nach Fig. 3 im vergrößerten Maßstab ersieht, sind anströmseitig auf den Siebkörper radiale, entgegen der Strömungsrichtung abragende Stege 13 angeordnet, die die Siebfläche 2 in einzelne gleichgroße Sektoren 14 unterteilen. Die Absaugdüse 6 ist in gleicher Weise sektorförmig ausgebildet, wobei die beiden radialen Seitenwände 15 und 16 der Düse 6 mindestens den gleichen Zentriwinkel zueinander wie die Stege 13 einschließen. Damit überdeckt die wirksame Fläche der Absaugdüse 6 bei entsprechender Stellung immer einen Sektor 14 zwischen den Stegen 13.

Wie man insbesondere aus Fig. 3 ersieht, enden die Seitenwände 15 und 16 der Absaugdüse 6 im Abstand vor den Stegen 13 und lassen damit einen Spalt a frei. Dieser Spalt a wird nach dem in Fig. 3 dargestellten Ausführungsbeispiel durch flexible Dichtlippen 20 überbrückt, die an den Stegen 13 befestigt sind und mindestens die freie Länge des Spaltes a aufweisen.

Die prinzipielle Wirkungsweise dieser Vorrichtung ist die folgende. Nach einer gewissen Betriebszeit werden sich auf der Anströmseite des Siebkörpers 2 Ablagerungen niedergeschlagen haben, die beispielsweise in Fig. 3 als Steine 21 und 22 dargestellt sind, die innerhalb eines Sektors 14 zwischen jeweils zwei Stegen 13 liegen. Wenn nun die Absaugdüse 6 über einen derartigen Sektor 14 gefahren ist, der seitlich über die flexiblen Dichtlippen 20 abgedichtet ist, entsteht durch die Wirkung der Absaugleitung eine Rückströmung 23 durch den Siebkörper 2 von der Abströmseite 24 des Siebkörpers 2 zurück in einen Sektor 14 und von dort in die Absaugdüse 6, wobei alle evtl. auf dem Siebkörper 2 anhaftenden Ablagerungen mit dieser Rückströmung 23 abgelöst und über die Absaugdüse 6 abgeführt werden. Wegen der seitlichen elastischen Abdichtung eines jeden Sektors 14 durch die elastischen Dichtlippen 20 kann also keine Querströmung von der Anströmseite des Siebkörpers 2 auftreten, sondern es wird eindeutig lediglich eine Rückströmung 23 erzeugt, die zur einwandfreien Ablösung von Ablagerungen beiträgt.

Wie aus Fig. 3 ersichtlich ist sind an den Stirnkanten der Seitenwände 15 und 16 der Absaugdüse 6 quer zu diesen verlaufende Bleche 25 vorgesehen, um einerseits ein einwandfreies Aufgleiten der Dichtlippen 20 auf die Absaugdüse 6 bei einer Drehung in Richtung des Pfeiles 26 sicherzustellen. Die Bleche 25 bilden außerdem eine Gleitfläche die bei der kontinuierlich bewegten Absaugdüse 6 die Zeitspanne zur Erzeugung einer ausreichenden Rückströmung verlängert.

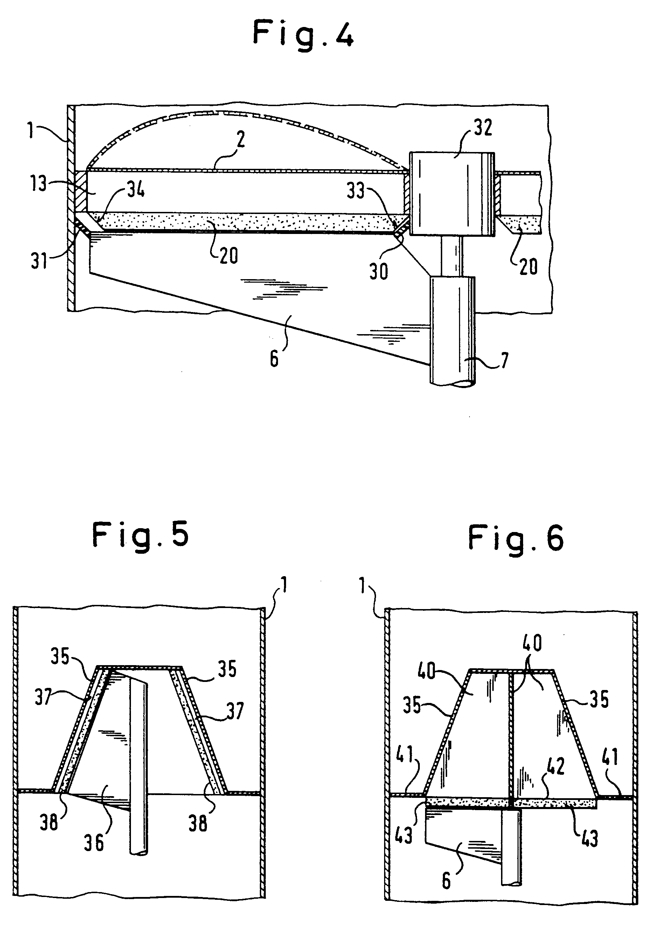

Um darüber hinaus auch Querströmungen auf der Anströmseite des Siebkörpers an den radial innen- und außenliegenden Kanten der Absaugdüse 6 zu verhindern, sind entsprechend dem Radialschnitt nach Fig. 4 radial innen an der Absaugdüse 6 eine elastische Dichtlippe 30 und radial außen eine Dichtlippe 31 vorgesehen, die an entsprechenden Gegenflächen, wie beispielsweise der Innenseite der Rohrleitung 1 bzw. dem zylindrischen Einsatz 32 für den Antrieb der Absaugdüse 6 entlanggleiten. Zweckmäßigerweise sind dabei die Dichtlippen 20, die bei dem hier dargestellten Ausführungsbeispiel an den Stegen 13 befestigt sind, an ihren Enden mit Abschrägungen 33 und 34 versehen.

Es wäre aber in gleicher Weise auch möglich, beide Arten von Dichtlippen 20 bzw. 30 und 31 zusammen an den Stegen 13 oder aber an der Absaugdüse 6 anzuordnen.

In Abwandlung von den Ausführungsbeispielen nach Fig. 1 bis 3, bei denen der Siebkörper 2 kugelkalottenförmig oder eben ausgebildet ist, kann entsprechend Fig. 5 in die Rohrleitung 1 auch ein kegelförmiges oder kegelstumpfförmiges Sieb 35 eingebaut sein. Die Absaugdüse 36, die im Innern des Siebkörpers 35 umläuft, muß dann entsprechend der Zeichnung gestaltet werden. Bei einer derartigen Ausbildung des Siebkörpers 35 können dann Stege 37 entlang von Mantellinien auf der Innenseite des Siebkörpers 35 angeordnet und mit entsprechenden Dichtlippen 38 versehen werden. Die Abreinigung erfolgt in gleicher Weise, wie zu dem Ausführungsbeispiel nach Fig. 3 dargestellt.

Es ist aber entsprechend der Darstellung in Fig. 6 auch möglich, bei einem kegelförmigen Siebkörper 35 den Innenraum durch radiale Trennwände 40, die sich von der Mittelachse bis zur Siebinnenseite erstrecken, in einzelne sektorförmige Kammern zu unterteilen. Diese Trennwände 40 schließen dann mit dem Befestigungsflansch 41 glatt ab und sind an ihrer freiliegenden Vorderkante 42 mit entsprechenden Dichtlippen 43 versehen, die bei entsprechender Drehung der Absaugdüse 6 mit deren Seitenwandungen in Eingriff kommen.

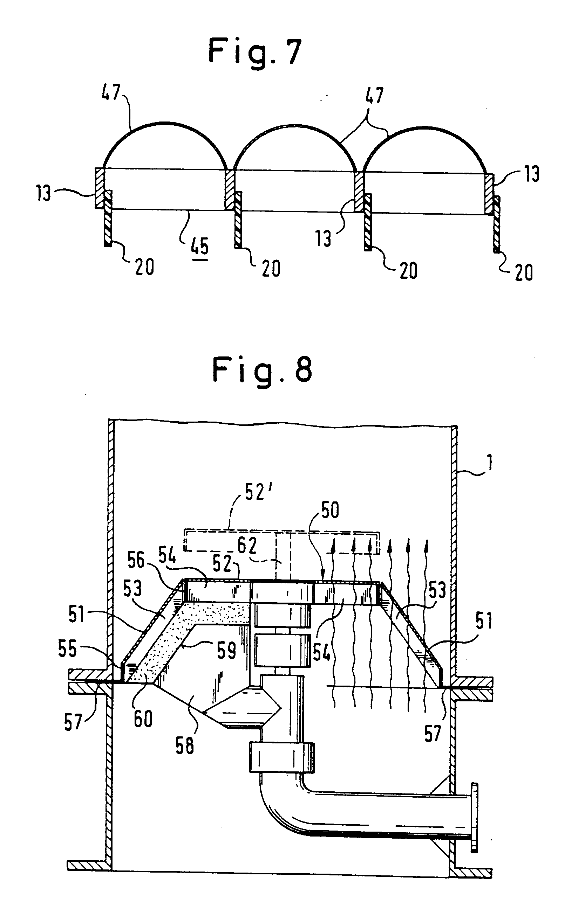

Eine besonders günstige und stabile Gestaltung des Siebkörpers, insbesondere bei sehr großen Rohrleitungsdurchmessern, ergibt sich entsprechend dem Ausführungsbeispiel nach Fig. 8, wenn die Stege 13 mit einem radial außenliegenden Ring 45 und einem nicht näher dargestellten innenliegenden Ring zu einem starren Traggerüst zusammengefaßt sind, daß dann in Aufsicht einen in etwa radförmigen Tragkörper vom Aussehen der in Fig. 2 dargestellten Anordnung ergibt. In die einzelnen Sektoren zwischen den Stegen 13 und dem Ring 45 können dann tiefgezogene, gewölbte einzelne Siebkörper 47 eingesetzt werden, die in gleicher Weise in radialer Richtung gewölbt sind (siehe auch die gestrichelte Kontur 47 in Fig. 4) und einen in etwa trapezförmigen Außenumfang aufweist. Mit einer derartigen Gestaltung haben nicht nur die einzelnen Siebflächen 47, sondern der gesamte Siebkörper durch das steife Traggerüst eine erhöhte Festigkeit, was bei Kühlwasserrohrleitungen von bis zu 4 m Durchmesser, wie sie bei großen Kraftwerken erforderlich sind, von wesentlicher Bedeutung ist, um allein den auftretenden hohen Wasserkräften standzuhalten. Auch hierbei sind dann entsprechend dem Ausführungsbeispiel nach Fig. 3 radiale Dichtlippen 20 an die Stege 13 angesetzt.

Die Anwendung dieses Konstruktionsprinzips nach Fig. 7 ist bei einem weiteren Ausführungsbeispiel nach Fig. 8 bei einem kegelstumpfförmigen Sieb 50 dargestellt. Dieses Sieb 50 weist einen kegelmantelförmigen Bereich 51 und einen stirnseitigen ebenen Bereich 52 von etwa halbem Durchmesser der Rohrleitung 1 auf. Dabei sind auf entsprechenden radialen Stegen 53 und 54 zwischen entsprechenden Ringen 55 und 56, die zusammen einen starren Rahmen bilden und über einen Flansch 57 in der Rohrleitung 1 festgelegt sind, die entsprechenden Siebflächen 51 und 52 aufmontiert. Die Absaugdüse 58 mit entsprechender abgewinkelter Außenkontur 59 trägt hierbei die Dichtlippen 60.

Ein besonderer Vorteil dieser Gestaltung des Siebkörpers 50 ist es, daß die horizontale Siebfläche 52, zusammen mit den zugehörigen Rahmenteilen 54 und 56, als Bypaßklappe verwendet und im Notfall in Achsrichtung ausgefahren werden kann, so daß sie dann die gestrichelte Stellung 52' einnimmt. Auch selbsttätiges Öffnen der Bypaß-Klappe mittels eines Scherstiftes 62 ist möglich.

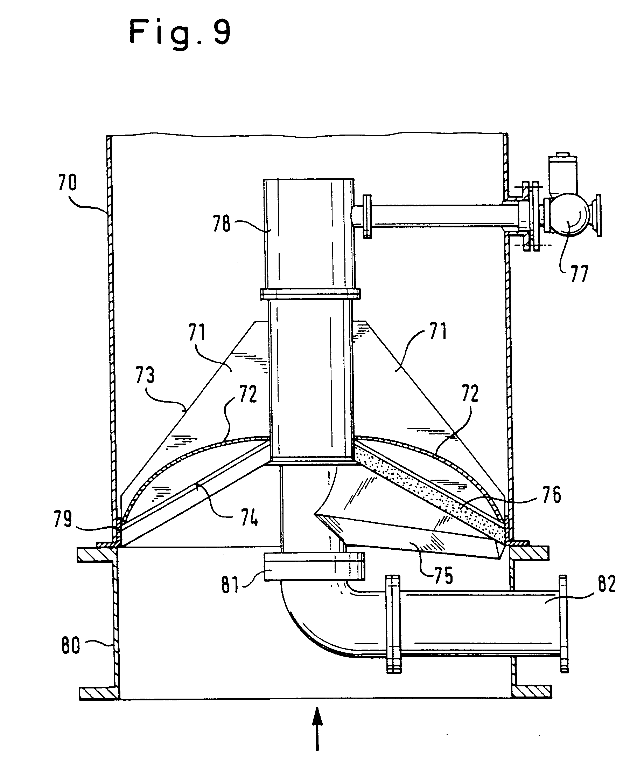

Eine weitere, besonders stabile Siebvorrichtung, die darüber hinaus noch wenig gesonderten Raum innerhalb des vorhandenen Rohrleitungs- bzw. Kondensatorsystems erfordert, ist in Fig. 9 dargestellt. Dabei sind innerhalb eines Rohrleitungsabschnittes 70 die einzelnen Stege 71, zwischen denen die Siebsegmente 72 angeordnet sind, so ausgebildet und angeordnet, daß sie quasi einen Hohlkegel bilden, da die Stegkanten 73 auf der Abströmseite und die Stegkanten 74 auf der Anströmseite entsprechend Kegelmantellinien verlaufen. Dadurch kann die rotierende Absaugvorrichtung 75 mit den Dichtlippen 76 anströmseitig vollständig innerhalb des durch die Anströmkanten 74 gebildeten Kegels untergebracht werden, so daß in axialer Richtung praktisch kein zusätzlicher Raum für die Absaugvorrichtung 75 erforderlich ist. Gleichzeitig ist der Antrieb 77 für die rotierende Absaugvorrichtung 75 auf die Abströmseite gelegt und treibt beispielsweise über ein nicht näher dargestelltes Winkelgetriebe 78 die Absaugvorrichtung 75 an.

Die zwischen den einzelnen Stegen 71 angeordneten Siebsegmente 72 bestehen hierbei lediglich aus zweidimensional gewölbten Siebplatten, die von der Mittelachse radial angenähert horizontal ausgehen und sich angenähert tangential bis an den Innenumfang des umlaufenden Halteringes 79 erstrecken.

Diese Siebvorrichtung kann jetzt sehr platzsparend vollständig innerhalb beispielsweise der Wasserkammer 70 des nicht näher dargestellten Kondensators oder einer vorhandenen Rohrleitung eingebaut werden. Als zusätzlicher axialer Raum ist dann lediglich noch ein kurzer Rohrstutzen 80 erforderlich, aus dem seitlich die über eine rotierende Dichtung 81 an die Absaugvorrichtung 75 angeschlossene, feststehende Absaugrohrleitung 82 seitlich herausführt.

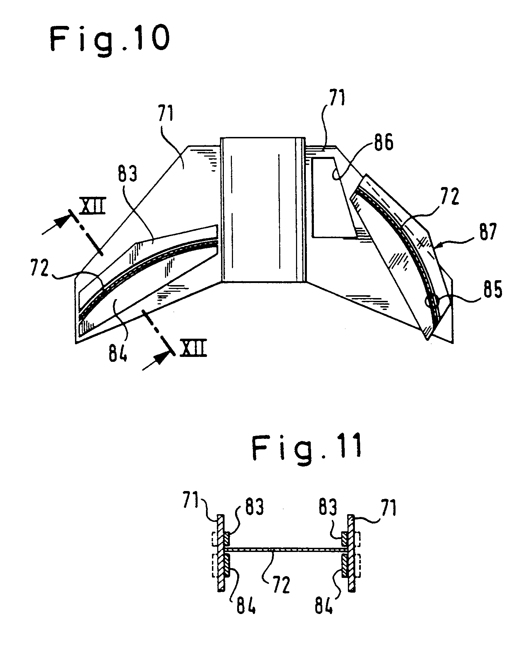

In Fig. 10 und 11 ist die Möglichkeit einer einfachen Halterung der Siebsegmente 72 nach Fig. 9 erläutert. Oberhalb und unterhalb dieser Siebsegmente 72 sind dabei seitlich an den Stegen 71 schmale Blechplatten 83 und 84 angeordnet, die an ihren dem Sieb 72 zugewandten Kanten entsprechend der Wölbung dieser Siebe 72 ausgeschnitten sind. Damit wird jedes Sieb 72 auf beiden Seiten zwischen zwei entsprechend zugeschnittenen Platten 83 und 84 gehaltent, wodurch sich eine einfache und sichere Befestigungsmöglichkeit ergibt, die auch ein leichtes Auswechseln der Siebe ermöglicht.

In der rechten Hälfte von Fig. 10 ist die Ausbildung einer solchen Siebplatte 72 als schwenkbare Bypaßklappe gezeigt. Hiernach ist das Sieb 72 mit den Halterungsplatten 83 und 84 als schwenkbare Einheit ausgestaltet und über eine zwischen zwei Segmenten 71 quer verlaufende Achse 85 nach oben schwenkbar gelagert, wobei in der Zeichnung der geöffnete Zustand gezeigt ist. Um dabei das das Öffnen der Bypaßklappe bewirkende Überdruckwasser schneller abführen zu können, sind in den benachbarten Stegen 71 beiderseits der Bypaßklappe oberhalb der geschlossenen Siebstellung Überströmöffnungen 86 vorgesehen, durch die das Wasser seitlich in den jeweils nächsten Sektor abfließen kann.

Wie man aus den vorstehenden Erläuterungen zu den einzelnen Ausführungsbeispielen ersieht, ist die Erfindung anwendbar auf Siebkörper jeder geometrischen Gestaltung, d.h. der Siebkörper kann als flaches ebenes Blech, als kugelkalottenförmiger Abschnitt, als Kegel oder als Kegelstumpf oder aber auch als zylindrische Mantelfläche ausgebildet sein, wobei es in jedem Falle möglich ist, die Dichtlippen entweder auf den Stegen oder an der Absaugdüse selbst anzubringen. Wesentlich für die Funktionsweise ist dabei eine ausreichende Überdeckung der einzelnen abzusaugenden Sektoren durch die Absaugdüse infolge ausreichend breiter Gleitflächen, da der Aufbau einer Rückströmung in den einzelnen Sektoren und damit ein sicheres Ablösen der Ablagerungen eine gewisse Zeit erfordert.

## Patentansprüche

1. Vorrichtung zur mechanischen Reinigung von Flüssigkeiten, insbesondere von einem Wärmetauscher zuzuführendem Kühlwasser, die in einer Rohrleitung strömen, mit einem rotationssymmetrischen Siebkörper (2) im wesentlichen in der Größe des Rohrdurchmessers sowie einer gleichachsigen, auf der angeströmten Seite des Siebkörpers (2) angeordneten Absaugvorrichtung (5), die drehbar gelagert, mit Hilfe eines Antriebes (77, 78) für die Dauer eines Reinigungsintervalls kontinuierlich mit konstanter Rotationsgeschwindigkeit verschwenkbar, mit einer Eintrittsdüse (6) versehen ist und während des Reinigungsintervalles nach und nach die gesamte Fläche des Siebkörpers (2) auf der Anströmseite absaugt, wobei der Siebkörper (2) in Bereiche eingeteilt ist, die Eintrittsdüse (6) der Absaugvorrichtung (5) jeden Bereich abdecken kann und in jedem Bereich der eigentlichen Siebfläche und der Absaugvorrichtung (5) ein Hohlraum zur vorübergehenden Aufnahme von Verunreinigungen vorhanden ist, dadurch **gekennzeichnet,** daß der Siebkörper (2) in an sich bekannter Weise auf der Anströmseite durch radiale, die Hohlräume bildenden Stege (z. B. 13) in einzelne, die Bereiche bildende Sektoren unterteilt ist, daß die Eintrittsdüse (6) der Absaugvorrichtung (5) eine solche Form hat, daß sie zu dem Zeitpunkt, zu dem die Eintrittsdüse gerade einen Sektor überdeckt, die benachbarten Sektoren im wesentlichen frei läßt, daß der Spalt zwischen den freien Stegkanten und der Kanten (15, 16) der Eintrittsdüse (6) der Absaugvorrichtung (5) durch flexible Dichtlippen (z. B. 20) von mindestens der Höhe des Spaltes überbrückt ist, und daß jede Kante der Eintrittsdüse (6) eine in Umlaufrichtung der Absaugvorrichtung verlaufende, die Breite der Eintrittsdüsenwand deutlich übersteigende Gleitfläche zur Berührung mit der jeweiligen Dichtlippe (20) an der Stegkante aufweist, deren Erstreckung in Umlaufrichtung beim Umlauf der Absaugvorrichtung (5) den zugeordneten Sektor eine so lange Zeitspanne isoliert, daß es zu einer ausreichenden Rückströmung durch das Sieb kommt.

2. Vorrichtung nach Anspruch 1, dadurch gekennzeichnet, daß die Stege (13) mit einem radial außenliegenden, umlaufenden Ring (45) ein starres Traggerüst bilden, in dessen Sektoren einzelne Siebkörbe (47) eingesetzt und gehalten sind.

3. Vorrichtung nach Anspruch 1, dadurch gekennzeichnet, daß der Siebkörper aus zweidimensional gewölbten, einzelnen Sieben (72) besteht, die von der Mittelachse in radialer Richtung annähernd horizontal ausgehen und sich annähernd tangential bis an den Innenumfang des Siebkörperrandes erstrecken.

4. Vorrichtung nach Anspruch 3, dadurch gekennzeichnet, daß die Siebe (72) mittels jeweils oberhalb und unterhalb von ihnen an den Stegen (71) befestigten Platten (83, 84) derart eingespannt sind, daß die Platten (83, 84) eine Kontur an der Einspannstelle entsprechend der Siebwölbung aufweisen.

5. Vorrichtung nach Anspruch 3 oder 4, dadurch gekennzeichnet, daß ein oder mehrere Einzelsiebe (72) als Überdruckklappen (87) derart ausgebildet sind, daß sie über eine im Bereich ihrer Außenkante quer zu ihrer Radialerstreckung verlaufende Achse (85) in Strömungsrichtung schwenkbar gehalten sind.

6. Vorrichtung nach Anspruch 5, dadurch gekennzeichnet, daß die Stegwände (71) beiderseits eines als Überdruckklappe (87) ausgebildeten Einzelsiebes (72) Überströmöffnungen (86) für das Überdruckwasser aufweisen.

7. Vorrichtung nach Anspruch 2, dadurch gekennzeichnet, daß durch Stege (53, 54) und Umfangsringe (55, 56) eine zylindrische oder kegelstumpfförmige Rahmenkonstruktion (50) gebildet ist, auf die entsprechende kegelmantelförmige Siebflächen (51) und eine stirnseitige ebene Siebfläche (52) aufmontiert sind.

8. Vorrichtung nach Anspruch 7, dadurch gekennzeichnet, daß die ebene Siebfläche (52) mit zugehörigen Rahmenteilen (56, 54) als Bypass-Klappe (52') axial in Strömungsrichtung ausfahrbar ist.

9. Vorrichtung nach einem der vorhergehenden Ansprüche, dadurch **gekennzeichnet,** daß die Siebkonstruktion zusammen mit der anströmseitigen Absaugvorrichtung (75) und deren abströmseitig der Siebstege (71) angeordneter Antrieb (77, 78) vollständig innerhalb der die Flüssigkeit führenden Rohrleitung (70) angeordnet sind.

10. Vorrichtung nach Anspruch 9, dadurch gekennzeichnet, daß der feststehende Teil der Absaugrohrleitung (82) axial-radial in einem der Rohrleitung (70) vorgeschalteten und diesen nach außen durchsetzenden Flanschrohrabschnitt (80) angeordnet ist.

## Claims

1. Apparatus for the mechanical clarification of liquids, in particular cooling water to be supplied to a heat exchanger, which flow in a pipe, with a rotationally symmetrical screen body (2) essentially the size of the pipe diameter as well as a coaxial suction device (5) which is arranged on the input side of the screen body (2), is mounted rotatably, is pivotable continuously at a constant speed of rotation by means of a drive mechanism (77, 78) for the duration of a cleaning period, is provided with an inlet nozzle (6) and during the cleaning period gradually subjects the whole surface of the screen body (2) on the input side to suction, wherein the screen body (2) is divided into regions, the inlet nozzle (6) of the suction device (5) can cover each region and in each region of the actual screen surface and the suction device (5) is a cavity for temporarily receiving contaminants, characterised in that the screen body (2) in a manner known in the art is divided on the input side by radial webs (e.g. 13) forming the cavities into individual sectors forming the regions, in that the inlet nozzle (6) of the suction device (5) has such a shape that at the moment at which the inlet nozzle is just overlapping a sector, it leaves the adjacent sectors essentially free, in that the gap between the free web edges and the edges (15, 16) of the inlet nozzle (6) of the suction device (5) is bridged by flexible sealing lips (e.g. 20) at least the height of the gap, and in that each edge of the inlet nozzle (6) comprises a sliding surface extending in the circumferential direction of the suction device and distinctly exceeding the width of the inlet nozzle wall for contact with the respective sealing lip (20) at the web edge, of which the dimension in the circumferential direction on rotation of the suction device (5) isolates the associated sector for such a long time that there is sufficient return flow through the screen.

2. Apparatus according to claim 1, characterised in that the webs (13) with a peripheral ring (45) on the outside radially form an independent rigid supporting structure in the sectors of which individual screen cages (47) are inserted and held.

3. Apparatus according to claim 1, characterised in that the screen body consists of two-dimensionally curved individual screens (72) which extend in a radial direction approximately horizontally from the centre axis and approximately tangentially to the inner circumference of the edge of the screen body.

4. Apparatus according to claim 3, characterised in that the screens (72) are clamped by means of plates (83, 84) attached to the webs (71) above and below them respectively, such that the plates (83, 84) have a contour at the clamping point corresponding to the screen curvature.

5. Apparatus according to claim 3 or 4, characterised in that one or more individual screens (72) are designed as pressure relief valves (87) in such a way that they are held pivotably in the direction of flow by means of a shaft (85) extending in the region of their outer edge transversely to their radial direction.

6. Apparatus according to claim 5, characterised in that the web walls (71) comprise, on both sides of an individual screen (72) constructed as a pressure relief valve (87), overflow openings (86) for the excess pressure water.

7. Apparatus according to claim 2, characterised in that by webs (53, 54) and peripheral rings (55, 56) there is formed a cylindrical or frustoconical frame construction (50) on which are mounted corresponding cone envelope-shaped screen surfaces (51) and a flat end screen surface (52).

8. Apparatus according to claim 7, characterised in that the flat screen surface (52) with associated frame members (56, 54) can be moved out axially in the direction of flow as a bypass valve (52').

9. Apparatus according to any of the preceding claims, characterised in that the screen construction together with the suction device (75) on the input side and the drive (77, 78) thereof arranged on the output side of the screen webs (71), are arranged completely within the pipe (70) conducting the liquid.

10. Apparatus according to claim 9, characterised in that the stationary part of the suction pipe (82) is arranged axially-radially in a flange pipe section (80) which is mounted in front of the pipe (70) and extends through the latter to the outside.

## Revendications

1. Dispositif pour l'épuration mécanique de liquides, en particulier d'eau de refroidissement qui doit être amenée par un échangeur thermique, qui passent dans une tuyauterie, avec un corps filtrant (2) de rotation symétrique, substantiellement de la grandeur du diamètre du tuyau, ainsi qu'un dispositif d'aspiration (5) de même axe, placé sur le côté du corps filtrant (2) où a lieu l'afflux, dispositif qui, en étant positionné en étant rotatif, peut être pivotant à l'aide d'un entraînement (77, 78) pour la durée d'un intervalle d'épuration de manière continue avec une vitesse de rotation constante, et qui est équipé d'une tuyère d'admission (6) et qui aspire, pendant l'intervalle d'épuration, peu à peu toute la surface du corps filtrant (2) sur le côté où a lieu l'afflux, le corps filtrant (2) étant divisé en zones, la tuyère d'admission (6) du dispositif d'aspiration (5) pouvant couvrir chaque zone et un espace creux existant dans chaque zone de la surface filtrante proprement dite et du dispositif d'aspiration (5) pour recevoir provisoirement les impuretés, **caractérisé en ce** que le corps filtrant (2) est divisé de manière connue en soi du côté de l'afflux par des barrettes radiales (par ex. 13) qui forment des espaces creux en secteurs qui forment les zones, que la tuyère d'admission (6) du dispositif d'aspiration (5) a une forme telle qu'au moment où la tuyère d'admission est justement en train de couvrir un secteur elle laisse les autres secteurs substantiellement libres, que la fente entre les arêtes libres des barrettes et les arêtes (15, 16) de la tuyère d'admission (6) du dispositif d'aspiration (5) est surmontée par des lèvres d'étanchéité flexibles (par ex. 20) d'au moins la hauteur de la fente et que chaque arête de la tuyère d'admission (6) présente une surface de glissement, qui est dans le sens de la rotation du dispositif d'aspiration, qui dépasse nettement la largeur de la paroi de la tuyère d'admission pour le contact avec la lèvre d'étanchéité (20) respective sur l'arête de la barrette, surface de glissement dont l'extension dans le sens de la rotation isole, lors de la rotation du dispositif d'aspiration (5), le secteur correspondant pendant une période de temps d'une durée telle que l'on obtient un reflux suffisant à travers le filtre.

2. Dispositif selon la revendication 1, **caractérisé en ce** que les barrettes (13) forment, avec un anneau périmétrique (45) situé à l'extérieur dans le sens radial, un cadre porteur rigide dans les secteurs duquel des paniers filtrants individuels (47) sont placés et maintenus.

3. Dispositif selon la revendication 1, **caractérisé en ce** que le corps filtrant est constitué par des filtres individuels (72) voûtés de manière bidimensionnelle qui partent de l'axe central dans le sens radial approximativement horizontalement et qui s'étendent de manière approximativement tangentielle jusqu'au périmètre intérieur du bord du corps filtrant.

4. Dispositif selon la revendication 3, **caractérisé en ce** que les filtres (72) sont encastrés au moyen de plaques (83, 84) fixées respectivement au-dessus et au-dessous d'eux sur les barrettes (71)de telle manière que les plaques (83, 84) présentent des contours, a l'endroit où est l'encastrement, qui correspondent à la voussure des filtres.

5. Dispositif selon la revendication 3 ou 4, **caractérisé en ce** qu'un ou plusieurs filtres individuels (72) sont configurés comme des clapets de surpression (87) de telle manière qu'ils sont maintenus pivotants dans le sens de l'écoulement par un axe (85) qui est transversal par rapport à leur extension radiale dans la zone de leur arête extérieure.

6. Dispositif selon la revendication 5, **caractérisé en ce** que les parois des barrettes (71) présentent des orifices de trop-plein (86) pour l'eau de surpression des deux côtés d'un filtre individuel (72) configuré comme un clapet de surpression (87).

7. Dispositif selon la revendication 2, **caractérisé en ce** qu'une construction de cadre (50) cylindrique ou tronconique est formée par des barrettes (53, 54) et des anneaux périmétriques (55, 56), construction sur laquelle sont montées des surfaces de filtre (51) correspondantes en forme d'aire latérale de cône et une surface de filtre plate sur l'avant (52).

8. Dispositif selon la revendication 7, **caractérisé en ce** que la surface de filtre plate (52) avec les parties de cadre correspondantes (56, 54) peut être déployée axialement dans le sens de l'écoulement comme clapet de dérivation (52').

9. Dispositif selon l'une des revendications précédentes, **caractérisé en ce** que la construction de filtre est placée, avec le dispositif d'aspiration côté afflux (75) et son entraînement (77, 78) placé côté écoulement des barrettes de filtre (71), entièrement à l'intérieur de la tuyauterie (70) qui conduit le liquide.

10. Dispositif selon la revendication 9, **caractérisé en ce** que la partie stationnaire du tuyau d'aspiration (82) est placée dans le sens axial-radial dans une section de tuyau à bride (80) placée en amont de la tuyauterie (70) et qui la traverse vers l'extérieur.
